# EUROPÄISCHE PATENTSCHRIFT

(11) **EP 1 609 697 B1**
(45) Veröffentlichungstag und Bekanntmachung des Hinweises auf die Patenterteilung: **25.02.2009**
(21) Anmeldenummer: 05012167.2
(22) Anmeldetag: 07.06.2005
(51) Int. Cl.: B62D 13/04

(54) **Lenkachse**
Steering axle
Essieu directeur

(30) Priorität: 16.06.2004 DE 102004029182
(43) Veröffentlichungstag der Anmeldung: 28.12.2005
(73) Patentinhaber: BPW Italia s.r.l., 37135 Verona (IT)
(72) Erfinder: Kühr, Kai, Dipl.Ing., 51580 Reichshof (DE); Tessari, Davide, 37038 Soave Verona (IT)
(74) Vertreter: Christophersen & Partner

(56) Entgegenhaltungen:
- EP-A- 0 246 461
- EP-B- 1 131 214
- WO-A-20/04048180

## Beschreibung

Die Erfindung betrifft eine Lenkachse, insbesondere Nachlauflenkachse für ein Anhängerfahrzeug, mit einem in einer Achsfaust endenden Achskörper und einem mittels eines Bolzens gelenkig unter der Achsfaust gelagerten Lenkschenkel mit dem Fahrzeugrad.

Eine Lenkachse mit diesen Merkmalen ist aus der EP 0 432 519 A1 bekannt. Es handelt sich hierbei um eine Zwangslenkung, bei der über einen zentral angeordneten hydraulischen Zylinder und Spurstangen die Lenkbewegung auf die an dem Achskörper gelenkig gelagerten Lenkschenkel übertragen wird. Im Bereich des Lenkschenkels ist der Aufbau der Lenkachse relativ einfach, indem sich der Lenkschenkel, an dem das jeweilige Fahrzeugrad gelagert ist, von unten frei drehbar gegen das als Achsfaust gestaltete äußere Ende des Achskörpers abstützt. Die Verbindung der zueinander drehbaren Teile erfolgt durch eine Verschraubung auf der Oberseite der Achsfaust.

Bekannt sind auch bereits Lenkachsen mit einer zwischen dem Achskörper und den Rädern angeordneten und gegenüber Lenkwinkelausschlägen wirkenden Stabilisierungseinrichtung. Derartige sogenannte Nachlauflenkachsen sind zum Beispiel in der EP 0 246 461 B1 oder der DE 203 04 107 U1 offenbart. Die Achsfaust wird hierbei von einem gabelförmig gestalteten Lenkschenkel umgriffen, wobei sich der als Drehlager dienende Bolzen sowohl durch beide Schenkelabschnitte des gabelförmigen Lenkschenkels, wie auch durch die Achsfaust hindurch erstreckt. Zur Erzielung der Selbststabilisierung befinden sich zwischen einem der beiden Gabelschenkel und der Achsfaust zwei Druckscheiben, von denen die eine Druckscheibe mit der Achsfaust, und die andere Druckscheibe mit dem jeweiligen Gabelschenkel verbunden ist. Die korrespondierenden Anlageflächen der Druckscheiben sind als Wellenprofile gestaltet, wodurch sich die Wellenprofile mit zunehmendem Drehwinkel des Fahrzeugrades zueinander verdrehen, und sich so der axiale Abstand zwischen Achsfaust und der Gabel des Lenkschenkels verändert. Es kommt zu einem rückdrehenden Moment und damit zu der gewünschten Selbststabilisierung der Nachlauflenkachse.

Die Nachlauflenkachse nach der EP 0 246 461 B1 ist konstruktiv aufwendig mit einer großen Anzahl von Einzelteilen. Nachteile stellen sich ferner bei der Montage bzw. Demontage der Drehlagerung zwischen Achsfaust und Lenkschenkel ein. Der fest in der Achsfaust sitzende Bolzen lässt sich nicht ohne weiteres entfernen, um so an die verschleißanfälligen Druckscheiben zu gelangen. Der Austausch der Druckscheiben wird insbesondere auch durch die beengte bauliche Situation zwischen den beiden Gabelschenkeln des Lenkschenkels beeinträchtigt. Dies führt zu hohen Montage- wie auch Wartungskosten.

Die genannten Nachteile gelten auch für die Nachlauflenkachse nach der DE 203 04 107 U1. Diese verwendet einen gegenüber der Nachlauflenkachse nach der EP 0 246 461 B1 verlängerten Bolzen, welcher sich über Stahlhülsen, die längs durch die Gabelschenkel hindurchführen, sowohl von oben wie auch von unten her gegen die Achsfaust abstützt. Die Stahlhülsen sind jeweils von elastischen Lagerelementen in Gestalt von Gummihülsen umgeben. Über diese elastischen Lagerelemente erfolgt die radiale Abstützung des Bolzens sowohl in dem oberen wie in dem unteren Gabelschenkel.

Eine Lenkachse nach dem Oberbegriff des Anspruchs 1 ist in WO 2004/048180 offenbart.

Ausgehend von dem eingangs genannten Stand der Technik ist es daher **Aufgabe** der Erfindung, eine mit einer gegenüber Lenkwinkelausschlägen wirkenden Stabilisierungseinrichtung ausgerüstete Lenkachse zu schaffen, die
- sich leicht montieren und demontieren lässt,
- sich aus einer geringen Zahl von Teilen zusammensetzt.

Zur **Lösung** dieser Aufgabe wird bei einer Lenkachse der eingangs beschriebenen Art vorgeschlagen, daß der Lenkschenkel unter der Achsfaust gelagert ist und der Bolzen von unten her gegen den Lenkschenkel abgestützt ist.

Während der Bolzen von unten her gegen den Lenkschenkel abgestützt ist, erfolgt die Abstützung des Bolzens von oben her vorzugsweise gegen die Achsfaust. Weiterhin bevorzugt wird, dass eine der beiden Abstützungen des Bolzens unter Zwischenlage eines axial kompressiblen Federelementes erfolgt, und dass eine der beiden Abstützungen ein Axiallager ist.

Gemäß einer weiteren Ausgestaltung der Lenkachse ist der Bolzen zu seiner axialen Abstützung an seinem einen Ende mit einem Gewinde versehen, auf das eine Mutter aufgeschraubt ist, wobei sich die Mutter von außen her gegen das Federelement abstützt. Auf diese Weise ist es möglich, die axiale Vorspannung des kompressiblen Federelementes, und damit auch die Rückstellkraft der Stabilisierungseinrichtung stufenlos einzustellen. Insbesondere lässt sich die über die Mutter auf das Federelement einwirkende Vorspannkraft abhängig vom jeweiligen Achstyp bzw. Fahrzeugtyp vorwählen, bevor die Mutter mittels einer geeigneten Verdrehsicherung endgültig fixiert wird. Als Schraubelement kann anstelle der Mutter auch eine Schraube verwendet werden, die dann in ein korrespondierendes Innengewinde des Bolzens eingreift.

Zur Einstellung der Vorspannung auf den exakt gewünschten Wert ist es wichtig, das Schraubelement mit einem bestimmten Drehmomentwert anzuziehen. Um dies unabhängig von dem jeweils zur Verfügung stehenden Werkzeug zu erreichen, kann die Mutter selbst mit Mitteln zur Begrenzung des maximalen Anzugsmomentes versehen sein. Eine derartige Drehmomentmutter ist, allerdings in der Ausführung als zentrale Achsmutter, aus der EP 1 131 214 A1 bekannt. Derselbe Effekt läßt sich auch unter Verwendung einer Schraube als Schraubelement erreichen.

Hinsichtlich der Wellenprofile wird mit einer weiteren Ausgestaltung vorgeschlagen, dass diese an zwei sich gegeneinander abstützenden Druckscheiben ausgebildet sind, und dass die Druckscheiben gleichgestaltet sind. Die dem Einlenken des Fahrzeugs entgegenstehende Kraft ist von der Steigerung der einzelnen Flanken des Wellenprofils abhängig, so dass allein über die Geometrie eines solchen Wellprofils für verschiedene Anwendungen auch unterschiedliche Einlenkeigenschaften der Nachlauflenkachse festlegbar sind. So können beispielsweise bei Fahrzeuganhängern zum Transport sehr schwerer Lasten Wellprofile geringerer Steigung verwendet werden, als bei Anwendungen mit weniger schweren Transportgütern.

Durch Verwendung zweier gleichgestalteter Druckscheiben lassen sich die Herstellungs-, Vertriebs- und auch Lagerhaltungskosten reduzieren.

Mit weiteren Ausgestaltungen der Erfindung wird vorgeschlagen, dass sich die Drehlagerung innerhalb des Lenkschenkels befindet, und dass der Bolzen ein gewichtsreduzierter Hohlbolzen ist.

Um die an der Drehlagerung wirkenden, erheblichen Momente sicher aufnehmen zu können, sollte das Verhältnis der Höhe der Drehlagerung zu deren Durchmesser weniger als 2 betragen. Optimal ist ein Verhältnis von 1,5 plus/minus 0,2.

Ferner wird vorgeschlagen, dass an dem Lenkschenkel Aufnahmen für das Bremsgehäuse einer Scheiben- oder Trommelbremse einstückig angeformt sind. Der Lenkschenkel ist auf diese Weise ein integriertes Bauteil, an dem infolge seiner einstückigen Bauweise alle wichtigen Funktionselemente konstruktiv realisiert sind.

Von besonderem Vorteil ist eine Ausgestaltung der Lenkachse, bei der der Achskörper im Bereich des Übergangs zur Achsfaust in vertikaler Richtung verkröpft ist. Eine solche Verkröpfung hat große Vorteile in Bezug auf die Bauhöhe der Lenkachse, woraus sich wiederum Vorteile für die Gestaltung der mit der Lenkachse ausgebildeten Fahrzeuge ergeben, z.B. hinsichtlich der Fahrzeughöhe. Vorzugsweise wird die Größe der Verkröpfung des Achskörpers so gewählt, dass sich die Wellenprofile in Höhe etwa der halben Höhe des Achskörperquerschnittes befinden.

Weitere Merkmale und Vorteile ergeben sich aus der nachfolgenden Beschreibung der zugehörigen Zeichnungen, in denen eine bevorzugte Ausführungsform einer Nachlauflenkachse lediglich beispielhaft dargestellt ist. Die einzige Zeichnung zeigt eine teilweise geschnittene Darstellung einer nicht vollständig dargestellten Nachlauflenkachse, vorzugsweise für einen Nutzfahrzeug-Anhänger.

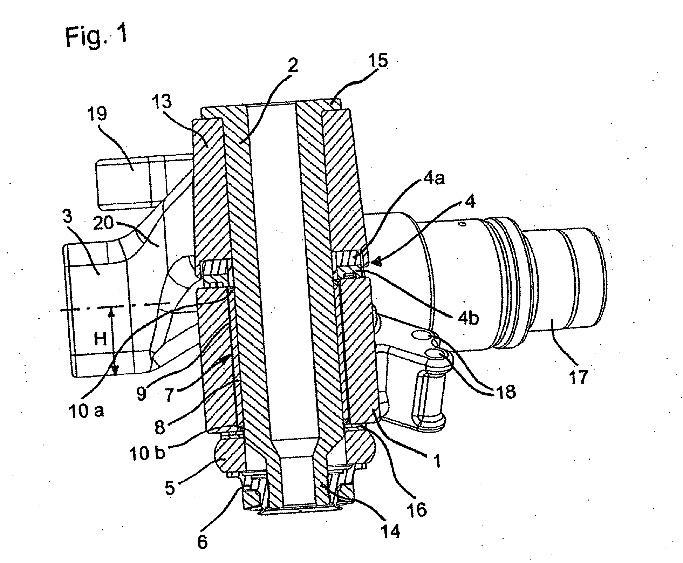

Fig. 1 zeigt nur den äußeren Teil der Nachlauflenkachse. Im wesentlichen besteht diese aus einem Achskörper 3, an welchen sich außen eine Achsfaust 13 anschließt, einem Lenkschenkel 1 zur Aufnahme der Radnabe und des Rades, einem Federelement 5, einem Bolzen 2 sowie einem Drucklager 4. Der Lenkschenkel 1 ist erfindungsgemäß einarmig ausgebildet, und unterscheidet sich insofern von gabelförmigen Lenkschenkeln, wie sie aus dem Stand der Technik für Nachlauflenkachsen bekannt sind. Der Lenkschenkel 1 ist daher unter der am Ende des Achskörpers ausgebildeten Achsfaust 13 angeordnet, dazwischen befindet sich das im Folgenden noch näher erläuterte Drucklager 4. Durch den Verzicht auf einen Lenkschenkel in Gestalt eines Gabelschenkels lässt sich die Drehlagerung des Lenkschenkels mit relativ geringer Bauhöhe realisieren. Zudem kommt diese Bauweise mit geringer Teileanzahl aus und ist besonders montagefreundlich. Zum Tauschen der Verschleißteile ist es nicht erforderlich, zunächst den Gelenkbolzen 2 herauszuziehen.

Das Drucklager 4 wird durch zwei gegeneinander verdrehbare Wellenprofile 4a, 4b gebildet, die sich in der Ausgestaltungsform gemäß Fig. 1 auf zwei identisch gestalteten Scheiben befinden, aber auch einstückig am Lenkschenkel 1 bzw. der Achsfaust 13 ausgebildet sein können. Die das Wellenprofil 4a tragende Scheibe ist verdrehsicher in Bezug auf die Achsfaust 13 angeordnet. Die das Wellenprofil 4b tragende Scheibe ist verdrehsicher am Lenkschenkel 1 befestigt. Beim Einlenken des Rades verdrehen sich die Wellenprofile 4a, 4b des Drucklagers 4 gegeneinander, so dass die in ihrer Ausgangsposition flächig aneinander liegenden Wellenprofile mit zunehmendem Drehwinkel Spalte bilden und sich so die Berührflächen zwischen beiden Wellenprofilen verkleinern. Auf diese Weise wird mit zunehmendem Drehwinkel das Fahrzeug der Steigung der sich gegenüberliegenden Wellenprofile entsprechend angehoben. Im übrigen ist die Funktion der beiden Wellenprofile eingehend in der EP 0 246 461 B1 beschrieben.

Mit zunehmendem Hub wird ein zwischen dem Lenkschenkel 1 und einer Mutter 6 angeordnetes Federelement 5 aus Gummi oder Elastomer zunehmend gestaucht. Entsprechend erhöht sich die Rückstellkraft an dem durch die Wellenprofile 4a, 4b gebildeten Drucklager. Die maximale Einfederung des Federelements 5 kann auch als Hubbegrenzung dienen, wobei der maximale Kompressionsweg kleiner als die Höhe der sich gegenüberliegenden Wellenberge der Wellenprofile 4a, 4b ist, um ein Überdrehen zweier Wellenberge ausschließen zu können. Überdrehen zwei Wellenberge, so wäre das erfindungsgemäße Rücklenken nicht mehr möglich.

Der als Hohlbolzen ausgebildete, durchgehende Bolzen 2 ist in die Achsfaust 13 des Achskörpers 3 verdrehsicher eingepresst und liegt mit einem an seinem einen Ende befindlichen radial erweiterten Bund von oben her an einer Stirnfläche der Achsfaust 13 an. An seinem anderen Ende weist der Bolzen 2 einen im Durchmesser reduzierten Gewindeabschnitt 14 auf, auf welchen die Mutter 6 aufgeschraubt und so das Federelement 5 gesichert und vorgespannt wird. Oberhalb seines Gewindeabschnitts 14 ist der Bolzen 2 innerhalb des Lenkschenkels 1 über ein Trockengleitlager 7 gelagert. Die sich mit dem Trockengleitlager in Drehkontakt befindende Mantelfläche des Bolzens 2 ist zumindest im Bereich des Trockenlagers 7 und entsprechend dem maximalen Hub des Drucklagers 4 von hoher Oberflächenqualität. Da das Trockengleitlager 7 ohne zusätzlichen Schmierstoff betrieben wird, ist der Lenkbolzen in diesem Bereich korrosionsbeständig ausgeführt, da der sonst durch den Schmierstoff erreichte Korrosionsschutz entfällt.

Wie darüber hinaus zu erkennen ist, besteht das Trockengleitlager 7 im wesentlichen aus einer die mechanische Stabilität des Trockengleitlagers 7 bestimmenden Hülse 9, einer innen in der Hülse durch eine PTFE-Hülse (Polytetrafluorethylen) gebildeten Gleitschicht 8 sowie zwei an den stirnseitigen Enden des Trockengleitlagers 7 angeordneten Dichtringen 10a, 10b. Die aus Metall bestehende Hülse 9 sitzt durch Presssitz in der Bohrung des Lenkschenkels 1.

Die in der Hülse 9 sitzende Gleitschicht 8 wird durch eine ein- oder zweistückige PTFE-Hülse gebildet, da PTFE für einen solchen Einsatz aufgrund seiner Stoffeigenschaften in besonderer Weise geeignet ist. Insbesondere ist die Oberfläche der PTFE-Hülse von hoher Qualität, wodurch die ohnehin geringen Haftreibungswerte der PTFE-Hülse gegenüber dem ebenfalls durch eine hohe Oberflächenqualität gekennzeichneten, den Gleitpartner bildenden Bereich der Mantelfläche des Bolzens 2 sehr gering sind. Aufgrund der hervorragenden Langzeittemperaturbeständigkeit des Werkstoffs PTFE sind derartige Trockengleitlager 7 über einen Temperaturbereich von -50 bis 140°C betreibbar. Ein weiterer wesentlicher Vorteil des Werkstoffs PTFE ist dessen chemische Beständigkeit gegenüber allen Medien, denen die Nachlauflenkachse während des Betriebs ausgesetzt ist. Außer PTFE eignen sich als Trockengleitschicht auch andere Kunststoffe, z.B. alle Trockenlauf-Eigenschaften aufweisenden Plastomere und Duromere.

Die Dichtringe 10a, 10b sind zwischen der Stirnfläche der Gleitschicht 8 und einer Einbördelung der Außenhüllle 9 axial fest eingespannt. Ferner sind an den Dichtringen 10a, 10b in Richtung der Mantelfläche des Bolzens 2 vorstehende Lippen ausgeformt, die während der Dreh- und Axialbewegung des Bolzens 2 eine wirkungsvolle Sicherung des Gleitlagers gegenüber Verunreinigungen darstellen.

Während sich der Bolzen 2 von unten her über den Gewindeabschnitt 14, die Mutter 6 und das Federelement 5 gegen das Gehäuse des Lenkschenkels 1 abstützt, stützt sich der Bolzen 2 von oben her an der Achsfaust 13 ab. Hierzu ist der Bolzen 2 am oberen Ende mit einem fest angeformten Radialbund 15 versehen. Da zwischen dem Federelement 5 und der Unterseite des Gehäuses des Lenkschenkels 1 eine Relativbewegung auftritt, befindet sich dort ein weiteres Axiallager 16, vorzugsweise ein flaches Axialgleitlager.

Einstückiger Bestandteil des Lenkschenkels 1 sind verschiedene konstruktive Elemente, wie sie im Zusammenhang mit der Radführung sowie der Radbremse benötigt werden. Dies sind neben dem eigentlich Achszapfen 17, welcher die Radnabe aufnimmt, Aufnahmen 18 für die Befestigung der nichtdrehenden Teile und insbesondere des Bremsgehäuses einer Scheiben- oder Trommelbremse, sowie femer ein Gelenkauge 19 für die bei einer Nachlauflenkachse erforderliche Spurstange.

Die voranstehend beschriebene gelenkige Verbindung zwischen Lenkschenkel und Achsfaust zeichnet sich durch eine besonders geringe Bauhöhe aus. Zudem kann auch die Fahrhöhe eines so ausgerüsteten Anhängerfahrzeuges gering gehalten werden, wenn sich, wie die Zeichnung dies erkennen lässt, der Achszapfen 17 höher befindet, als das voranstehend beschriebene Gehäuse des Lenkschenkels. Zur kompakten Bauform trägt insbesondere auch bei, dass der Achskörper 3 im Bereich des Übergangs zu der Achsfaust 13 eine Verkröpfung 20 aufweist. Es handelt sich hierbei um eine Verkröpfung in vertikaler Richtung und von solcher Größe, dass sich die Wellenprofile 4a, 4b in Höhe etwa der halben Höhe H des Achskörperquerschnittes befinden. Dies bewirkt zugleich, dass sich die Mittellinien von Achskörper 3 und Achszapfen 17 auf nahezu der selben Höhe befinden.

### Bezugszeichen

- 1: Lenkschenkel
- 2: Bolzen, Gelenkbolzen
- 3: Achskörper
- 4: Drucklager
- 4a: Wellenprofil
- 4b: Wellenprofil
- 5: Federelement
- 6: Mutter
- 7: Trockengleitlager
- 8: Gleitschicht
- 9: Hülse
- 10a: Dichtring
- 10b: Dichtring
- 13: Achsfaust
- 14: Gewindeabschnitt
- 15: Radialbund
- 16: Axiallager
- 17: Achszapfen
- 18: Aufnahme für die Bremse
- 19: Gelenkauge für Spurstange
- 20: Verknüpfung

- H: halbe Höhe des Achskörperquerschnittes

## Patentansprüche

1. Lenkachse, insbesondere Nachlauflenkachse für ein Anhängerfahrzeug, mit einem in einer Achsfaust (13) endenden Achskörper (3) und einem mittels eines Bolzens (2) gelenkig an der Achsfaust (13) gelagerten Lenkschenkel (1) mit dem Fahrzeugrad, der Bolzen (2) zugleich die Achsfaust (13), den Lenkschenkel (1) und zwei gegeneinander abgestützte und zueinander korrespondierende Wellenprofile (4a, 4b) durchsetzt, von denen das eine Wellenprofil (4a) drehfest bezüglich der Achsfaust (13), und das andere Wellenprofil (4b) drehfest an dem Lenkschenkel (1) angeordnet ist **dadurch gekennzeichnet, daß** der Lenkschenkel (1) unter der Achsfaust (13) gelagert ist und
der Bolzen (2) von unten her gegen den Lenkschenkel (1) abgestützt ist.

2. Lenkachse nach Anspruch 1, **dadurch gekennzeichnet, dass** der Bolzen (2) von oben her gegen die Achsfaust (13) abgestützt ist.

3. Lenkachse nach Anspruch 2 in Verbindung mit Anspruch 1, **dadurch gekennzeichnet, dass** eine der beiden Abstützungen des Bolzens (2) unter Zwischenlage eines axial kompressiblen Federelementes (5) erfolgt, und dass eine der beiden Abstützungen ein Axiallager (16) ist.

4. Lenkachse nach Anspruch 3, **dadurch gekennzeichnet, dass** zur axialen Abstützung des Bolzens (2) dieser an seinem einen Ende mit einem Gewindeabschnitt (14) versehen ist, auf den eine Mutter (6) aufgeschraubt ist, und dass sich die Mutter (6) von außen her gegen das Federelement (5) abstützt.

5. Lenkachse nach Anspruch 4, **dadurch gekennzeichnet, dass** das Federelement (5) durch Anziehen der Mutter (6) von unten her gegen den Lenkschenkel (1) vorgespannt ist.

6. Lenkachse nach einem der Ansprüche 3 bis 5, **gekennzeichnet durch** einen Elastomerring als Federelement (5).

7. Lenkachse nach einem der Ansprüche 4 bis 6, **dadurch gekennzeichnet, dass** die Mutter (6) mit Mitteln zur Begrenzung des maximalen Anzugsmoments versehen ist.

8. Lenkachse nach einem der vorangehenden Ansprüche, **dadurch gekennzeichnet, dass** die Wellenprofile (4a, 4b) an zwei sich gegeneinander abstützenden Druckscheiben ausgebildet sind, und dass die Druckscheiben gleich gestaltet sind.

9. Lenkachse nach einem der vorangehenden Ansprüche, **dadurch gekennzeichnet, dass** sich die Drehlagerung innerhalb des Lenkschenkels (1) befindet.

10. Lenkachse nach einem der vorangehenden Ansprüche, **dadurch gekennzeichnet, dass** der Bolzen (2) ein Hohlbolzen ist.

11. Lenkachse nach einem der vorangehenden Ansprüche, **dadurch gekennzeichnet, dass** das Verhältnis der Höhe der Drehlagerung zu deren Durchmesser weniger als 2 beträgt, vorzugsweise 1,5 plus/minus 0,2.

12. Lenkachse nach einem der vorangehenden Ansprüche, **dadurch gekennzeichnet, dass** an dem Lenkschenkel (1) Aufnahmen (18) für das Bremsgehäuse einer Scheiben- oder Trommelbremse einstückig angeformt sind.

13. Lenkachse nach einem der vorangehenden Ansprüche, **dadurch gekennzeichnet, dass** der Achskörper (3) im Bereich des Übergangs zur Achsfaust (13) in vertikaler Richtung verkröpft ist.

14. Lenkachse nach Anspruch 13, **gekennzeichnet durch** eine solche Größe der Verkröpfung (20), dass sich die Wellenprofile (4a, 4b) in Höhe etwa der halben Höhe (H) des Achskörperquerschnittes befinden.

15. Lenkachse nach einem der vorangehenden Ansprüche, **dadurch gekennzeichnet, daß** sich die Mittellinie des Achszapfens (17) etwa in Höhe der halben Höhe (H) des Achskörperquerschnittes befindet.

## Claims

1. Steering axle, in particular a trailing steering axle for a trailer vehicle, comprising an axle body (3) which ends in an axle stub (13), and a steering arm (1) comprising the vehicle wheel, said steering arm being mounted on the axle stub (13) in an articulated manner by means of a bolt (2), the bolt (2) simultaneously passing through the axle stub (13), the steering arm (1) and two corrugated profiles (4a, 9b) which correspond to one another and are supported against one another, of which one corrugated profile (4a) is arranged in a rotationally fixed manner with respect to the axle stub (13) and the other corrugated profile (4b) is arranged in a rotationally fixed manner on the steering arm (1), **characterised in that** the steering arm (1) is mounted below the axle stub (13) and the bolt (2) is supported against the steering arm (1) from below.

2. Steering axle according to claim 1, **characterised in that** the bolt (2) is supported against the axle stub (13) from above.

3. Steering axle according to claim 2 in conjunction with claim 1, **characterised in that** one of the two points of support of the bolt (2) takes place with the interposition of an axially compressible spring element (5), and **in that** one of the two points of support is an axial bearing (16).

4. Steering axe according to claim 3, **characterised in that**, for the axial support of the bolt (2), the latter is provided at one end with a threaded section (14), onto which a nut (6) is screwed, and **in that** the nut (6) is supported against the spring element (5) from the outside.

5. Steering axle according to claim 4, **characterised in that** the spring element (5) is pretensioned against the steering arm (1) from below by tightening the nut (6).

6. Steering axle according to one of claims 3 to 5, **characterised by** an elastomeric ring as the spring element (5).

7. Steering axle according to one of claims 4 to 6, **characterised in that** the nut (6) is provided with means for limiting the maximum tightening torque.

8. Steering axle according to one of the preceding claims, **characterised in that** the corrugated profiles (4a, 4b) are formed on two pressure discs which are supported against one another, and **in that** the pressure discs are of identical design.

9. Steering axle according to one of the preceding claims, **characterised in that** the rotary bearing is located within the steering arm (1).

10. Steering axle according to one of the preceding claims, **characterised in that** the bolt (2) is a hollow bolt.

11. Steering axle according to one of the preceding claims, **characterised in that** the ratio of the height of the rotary bearing to the diameter thereof is less than 2, preferably 1.5 plus/minus 0.2.

12. Steering axle according to one of the preceding claims, **characterised in that** holders (18) for the brake housing of a disc brake or drum brake are integrally formed in one piece on the steering arm (1).

13. Steering axle according to one of the preceding claims, **characterised in that** the axle body (3) is bent in the vertical direction in the region of the transition to the axle stub (13).

14. Steering axle according to claim 13, **characterised by** such a magnitude of the bend (20) that the corrugated profiles (4a, 4b) are located approximately half-way along the height (H) of the axle body cross section.

15. Steering axle according to one of the preceding claims, **characterised in that** the centre line of the axle journal (17) is located approximately half-way along the height (H) of the axle body cross section.

## Revendications

1. Essieu directeur, en particulier essieu entraîné pour un véhicule remorqué, comportant un corps d'essieu (3), se terminant dans une chape d'essieu (13), et un levier de commande (1) avec la roue de véhicule, monté de manière articulée sur la chape d'essieu (13) au moyen d'un boulon (2), le boulon (2) traverse en même temps la chape d'essieu (13), le levier de commande (1) et deux profils d'arbre (4a, 4b) prenant appui l'un sur l'autre et correspondant l'un à l'autre, parmi lesquels un profil d'arbre (4a) est monté de manière immobile en rotation par rapport à la chape d'essieu (13) et l'autre profil d'arbre (4b) est monté de manière immobile en rotation sur le levier de commande (1), **caractérisé en ce que** le levier de commande (1) est monté en dessous de la chape d'essieu (13) et le boulon (2) prend appui par le bas contre le levier de commande (1).

2. Essieu directeur selon la revendication 1, **caractérisé en ce que** le boulon (2) prend appui par le haut contre la chape d'essieu (13).

3. Essieu directeur selon la revendication 2 en association avec la revendication 1, **caractérisé en ce que** l'un des deux appuis du boulon (2) est obtenu moyennant le montage intercalé d'un élément ressort (5) axialement compressible, et **en ce que** l'un des deux appuis est un palier axial (16).

4. Essieu directeur selon la revendication 3, **caractérisé en ce que,** en vue de l'appui axial du boulon (2), celui-ci est muni à l'une de ses extrémités d'un tronçon fileté (14), sur lequel est vissé un écrou (6), et **en ce que** l'écrou (6) prend appui depuis l'extérieur contre l'élément ressort (5).

5. Essieu directeur selon la revendication 4, **caractérisé en ce que,** sous l'effet du serrage de l'écrou (6), l'élément ressort (5) est précontraint par le bas contre le levier de commande (1).

6. Essieu directeur selon l'une quelconque des revendications 3 à 5, **caractérisé par** une bague élastomère pour former l'élément ressort (5).

7. Essieu directeur selon l'une quelconque des revendications 4 à 6, **caractérisé en ce que** l'écrou (6) est muni de moyens destinés à limiter le couple de serrage maximal.

8. Essieu directeur selon l'une quelconque des revendications précédentes, **caractérisé en ce que** les profils d'arbre (4a, 4b) sont réalisés sur deux disques de pression prenant appui l'un sur l'autre, et **en ce que** les disques de pression sont réalisés de manière identique.

9. Essieu directeur selon l'une quelconque des revendications précédentes, **caractérisé en ce que** le palier rotatif se situe à l'intérieur du levier de commande (1).

10. Essieu directeur selon l'une quelconque des revendications précédentes, **caractérisé en ce que** le boulon (2) est un boulon creux.

11. Essieu directeur selon l'une quelconque des revendications précédentes, **caractérisé en ce que** le rapport entre la hauteur du palier rotatif et le diamètre de celui-ci est inférieur à 2, de préférence 1,5 plus ou moins 0,2.

12. Essieu directeur selon l'une quelconque des revendications précédentes, **caractérisé en ce que** des logements (18) pour le boîtier d'un frein à disques ou à tambour sont formés d'un seul tenant sur le levier de commande (1).

13. Essieu directeur selon l'une quelconque des revendications précédentes, **caractérisé en ce que** le corps d'essieu (3) est coudé dans le sens vertical dans la zone de la transition vers la chape d'essieu (13).

14. Essieu directeur selon la revendication 13, **caractérisé par** une dimension du coude (20) telle que les profils d'arbre (4a, 4b) se situent sensiblement à la hauteur de la moitié de la hauteur (H) de la section du corps d'essieu.

15. Essieu directeur selon l'une quelconque des revendications précédentes, **caractérisé en ce que** la médiane de la fusée d'essieu (17) se situé sensiblement à la hauteur de la moitié de la hauteur (H) de la section du corps d'essieu.
